# EUROPÄISCHE PATENTSCHRIFT

(11) **EP 3 521 781 B1**
(45) Veröffentlichungstag und Bekanntmachung des Hinweises auf die Patenterteilung: **16.07.2025**
(21) Anmeldenummer: 18154500.5
(22) Anmeldetag: 31.01.2018
(51) Int. Cl.: G01H 13/00, G01M 7/02, G01N 29/04, G01N 29/12, G01N 29/34, G01N 29/44

(54) **SCHWINGUNGSANALYSE AN EINEM MITTELS ADDITIVER FERTIGUNG PRODUZIERTEN OBJEKT**
ANALYSIS OF VIBRATIONS AFFECTING OBJECTS PRODUCED BY MEANS OF ADDITIVE MANUFACTURING
ANALYSE DES VIBRATIONS D'UN OBJET FABRIQUÉ PAR FABRICATION ADDITIVE

(43) Veröffentlichungstag der Anmeldung: 07.08.2019
(73) Patentinhaber: Hexagon Technology Center GmbH, 9435 Heerbrugg (CH)
(72) Erfinder: MEILE, Silvan, CH-9010 St.Gallen (CH); ISELI, Claudio, CH-9434 Au (CH)
(74) Vertreter: Kaminski Harmann

(56) Entgegenhaltungen:
- EP-A1- 1 950 869
- WO-A1-2017/129294
- US-A1- 2016 084 802

## Beschreibung

Die Erfindung betrifft ein Verfahren zur Prüfung eines mittels additiver Fertigung hergestellten Objekts sowie eine entsprechende Vorrichtung.

In vielen technischen Anwendungsbereichen besteht das Bedürfnis, Objekte mit hoher Genauigkeit oder bezüglich deren Zusammensetzung zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für solche Anwendungen werden beispielsweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Die koordinative Oberflächenvermessung erlaubt das Feststellen von geometrischen Abweichungen am Werkstück von entsprechenden Sollwerten. Diesbezüglich kann damit eine hochgenaue Angabe zur Fertigungspräzision gemacht werden. Es kann also festgestellt werden ob Form und Dimensionierung des produzierten Teils innerhalb einer vorgegebenen Toleranz liegen und das Bauteil als Ausschuss oder Gutteil anzusehen ist.

Die geometrische Betrachtung insbesondere der Objektoberfläche lässt naturgemäss und typischerweise die Beschaffenheit des Objekts in dessen Körperinnerem ausser Acht. Informationen bezüglich möglicher Materialfehler oder Materialbrüche bleiben unzugänglich.

Jedoch gewinnen solche Objekteigenschaften, die nicht mehr allein die Geometrie des Werkstücks betreffen, durch die Weiterentwicklung bestimmter Fertigungsverfahren weiter an Bedeutung. So offenbart beispielsweise die Patentschrift US 2016/084802 A1 ein Verfahren zur Bestimmung der Qualität eines Laserschweiss-Prozesses und die Patentschrift EP 1 950 869 A1 ein Verfahren zur Bestimmung der Lockerung eines Statorkerns einer rotierenden elektrischen Maschine. Abseits traditioneller Fertigungsmethoden wie Fräsen, Schleifen, Polieren, Schweissen oder Löten ist hier insbesondere die additive Fertigung oder der 3D-Druck zu nennen. Standen für zerspanende Materialbearbeitungen bislang Toleranzen bezüglich des Materialabtrags als zu beachtende Grössen im Vordergrund, sind die relevanten Parameter bei einer additiven Fertigung andere.

Die additive Fertigung, oft auch als 3D-Druck bezeichnet, unterscheidet sich von den genannten klassischen Zerspanungstechniken typischerweise dadurch, dass das Fertigungsmaterial nicht sukzessive abgetragen wird, sondern das zu bildende Objekt punkt- oder schichtweise aufgebaut wird. Es wird Materialschicht über Materialschicht aufgetragen und die jeweiligen Schichten werden z.B. durch lokale Vernetzung oder Sintern partiell verfestigt und in einen finalen Materialzustand überführt. Das Ausgangsmaterial kann hierbei in loser Pulverform, viskos oder solid (z.B. als Draht)vorliegen. Jedoch sind zudem abtragende Verfahren oder Kombinationen aus beiden Ansätzen bekannt.

Durch den schichtweisen Aufbau von Werkstücken bei additivem Fertigen ergeben sich neben der klassischen Einhaltung von geometrischen Fertigungstoleranzen weitere kritische Fertigungseigenheiten. Hierbei treten vermehrt innere Objekteigenschaften in den Vordergrund. In anderen Worten bedeutet dies, dass für das additive Fertigen insbesondere sichergestellt werden muss, dass die Materialbeschaffenheit im Körperinneren einer Sollvorgabe entspricht, d.h. entsprechend der jeweiligen Fertigungsmethode auch im Inneren wie gewünscht verfestigt ist. Zudem sind unerwünschte Materialspannungen, Risse oder Lufteinschlüsse in einem fertigen Objekt zu vermeiden.

Für die Erfassung solcher Effekte sind heutig Standardmessgeräte wie eine Koordinatenmessmaschine nicht ausreichend umfangreich ausgestattet oder passend ausgelegt. Zwar können damit oberflächliche Abweichungen wie Risse oder Deformationen erfasst werden, jedoch sind mögliche Fehlstellen im Körperinneren regelmässig nicht messbar.

Es ist daher Aufgabe der vorliegenden Erfindung eine Methode und eine entsprechende Vorrichtung anzugeben, die eine verbesserte Objektprüfung eines mittels additiver Fertigung aufgebauten Objekts bereitstellt.

Insbesondere ist es Ausgabe der Erfindung ein additiv gefertigtes Objekt hinsichtlich einer strukturellen Integrität prüfbar zu machen.

Diese Aufgaben werden durch die Verwirklichung der Merkmale der unabhängigen Ansprüche gelöst.

Merkmale, die die Erfindung in alternativer oder vorteilhafter Weise weiterbilden, sind den abhängigen Patentansprüchen zu entnehmen.

Der Erfindung liegt die Idee zu Grunde mittels einer Modalanalyse eines Bauteils, das durch ein 3D-Druckverfahren gefertigt ist, das dynamische Verhalten dieses schwingungsfähigen Teils zu bestimmen und anhand dieser Messung eine Information bezüglich der Teilbeschaffenheit abzuleiten. Durch eine solche Methodik können nicht nur Abweichungen von einer gewünschten Teilegeometrie sondern zudem Abweichungen, Unregelmässigkeiten und/oder Fehlstellen in der Teilestruktur selbst festgestellt werden.

Die Datenbasis, auf deren Grundlage ein Vergleich des gemessenen Schwingungsverhaltens erfolgen kann, kann mittels insbesondere mehrfacher Referenzmessung mit entsprechenden Referenzteilen erfolgen.

Einen weiteren Aspekt der Erfindung bildet jedoch insbesondere die Simulation in einem zu prüfenden Teil entstehender oder vorliegender Resonanzen. Hierzu wird ein virtuelles digitales Abbild des Prüfobjekts erzeugt und die Anregung einer Schwingung im Objekt sowie die Schwingungsantwort des Objekts (numerisch) berechnet. Es können als beispielsweise einzelne Frequenzen oder Frequenzbänder ermittelt werden, die wiederum jeweils oder in Kombination für einen bestimmten Fertigungsparameter (z.B. Materialdichte, Grösse, Form, Steifigkeit etc.) charakteristisch sind. Durch eine entsprechende Zuordnung der Frequenzen oder Frequenzbänder zu jeweiligen Charakteristika kann dann basierend auf einer Abweichung einer gemessenen Frequenz von dem zugehörigen simulierten Wert eine spezifische Information über den betreffenden Fertigungsparameter abgeleitet werden, z.B. ob das gefertigte Objekt über die vorgegebene Steifigkeit verfügt.

Die Erfindung betrifft somit ein Verfahren zur Objektanalyse mit einem Messen eines frequenzabhängigen Eigenschwingverhaltens des Objekts durch dynamisch-mechanisches Anregen des Objekts über einen definierten Frequenzbereich, wobei das Anregen des Objekts mittels Erzeugen einer Körperschwingung durch Anlegen eines Testsignals (z.B. mit einer bekannten Schwingung oder Vibration) erfolgt. Zudem erfolgt ein Erfassen von in dem Objekt aufgrund des Anregens erzeugten Körperschwingungen.

Ausserdem wird ein frequenzabhängiges Referenzeigenschwingverhalten für das Objekt simuliert durch ein Erzeugen einer virtuellen Repräsentation des Objekts (z.B. digitales Modell oder CAD-Modell) und ein Durchführen einer Finite Elemente Analyse basierend auf der digitalen virtuellen Repräsentation mit simuliertem Anregen der virtuellen Repräsentation über einen mit dem definierten Frequenzbereich zumindest überlappenden virtuellen Frequenzbereich zur Herbeiführung einer Körperschwingung, und mit Berechnen von in dem Objekt aufgrund des simulierten Anregens erzeugten virtuellen Körperschwingungen.

Als Resultat der obigen beiden Schritte werden also ein erstes (gemessenes) Eigenschwingverhalten und ein zweites (simuliertes) Referenzeigenschwingverhalten des Objekts erhalten.

Basierend auf einem Vergleich des gemessenen Eigenschwingverhaltens und des simulierten Referenzeigenschwingverhaltens wird dann ein Objektzustand abgeleitet. Der Objektzustand vermag Auskunft über die Fertigungsqualität des Objekts zu geben, d.h. ob das gemessene Objekt beispielsweise im Rahmen von gesetzten Toleranzen gefertigt ist oder zumindest ein Objektparameter den Toleranzbereich überschreitet.

Durch diesen Vergleich wird zunächst eine Aussage darüber möglich, ob das Objekt korrekt gefertigt ist. In einer Ausführungsform der Erfindung kann eine spezifische Objekteigenschaft einem bestimmten Frequenzbereich oder einer bestimmten Resonanzfrequenz zugeordnet oder mit dieser in Bezug gesetzt werden, wobei der Objektzustand eine Information zu dieser spezifischen Objekteigenschaft aufweist.

Eine solche Zuordnung kann z.B. mittels Simulation an Objekten mit unterschiedlichen Parametern erfolgen, wobei für einen jeweiligen unterschiedlichen Parametersatz ein Frequenzspektrum für das betreffende Objekt berechnet wird. Aus den dabei feststellbaren Unterschieden in den Spektren (z.B. Lage der Eigenresonanzen) kann eine entsprechende Auswirkung einer Parameteränderung auf das Schwingverhalten des Objekts abgeleitet werden.

In anderen Worten kann die Zuordnung basierend auf mehrfachem Simulieren des frequenzabhängigen Referenzeigenschwingverhaltens für das Objekt mit unterschiedlichen Objektparametern erfolgen, wobei die Objekteigenschaft durch eine Änderung zumindest eines Objektparameters gezielt beeinflusst wird. Hierzu können Auswirkungen einer Parameteränderung auf eine oder mehrere Objekteigenschaften, wie z.B. der Steifigkeit, bereits prognostizierbar oder bekannt sein.

Die Zuordnung kann ausserdem mittels gezielter (lokaler) Veränderung eines mehrfach zu vermessenden, insbesondere vor und nach der herbeigeführten Veränderung zu vermessenden, Referenzobjekts abgeleitet werden.

Im Umkehrschluss kann anhand der vorherigen Zuordnung und durch eine Messung des Eigenschwingverhaltens eines Objekts auf den jeweiligen Zustand eines oder mehrerer Objektparameter geschlossen werden.

Es kann also basierend auf einem Vergleich eines gemessenen Eigenschwingverhaltens und eines simulierten Referenzeigenschwingverhaltens für den bestimmten Frequenzbereich oder für die bestimmte Resonanzfrequenz eine Information bezüglich eines Übereinstimmungsniveaus des Objektzustands mit einem Soll-Objektzustand abgeleitet werden. Anhand dieser Information kann eine Aussage zur Existenz eines bestimmten Objektfehlers abgeleitet werden. In anderen Worten, entspricht der abgeleitete aktuelle Objektzustand zumindest weitgehend, d.h. im Rahmen vorgegebener Toleranzen, einem hierfür definierten Sollzustand, kann das Objekt als korrekt gefertigt angesehen oder markiert werden.

Gemäss einer Ausführungsform kann im Rahmen des Simulierens ein Messaufbau zumindest zum Teil mit berücksichtigt, d.h. mitsimuliert, werden. Es wird damit nicht allein das Objekt und dessen Eigenschaften simuliert, sondern zudem die zur Vermessung des Objekts vorgesehene Vorrichtung in Teilen simuliert. Entsprechend wird auch die Anregung der Vorrichtung simuliert. Hierdurch kann der Vergleich präziser und mit einem entsprechend verlässlicheren Resultat durchgeführt werden.

Eigenspannungen im Objekt, die durch die reale, additive Produktion entstehen können, werden erfindungsgemäß berücksichtigt.

Diese werden simulativ oder per Referenzmessung in ein Objektmodell eingearbeitet.

Alternativ oder zusätzlich können Eigenspannungen in dem Objekt durch weitere Bearbeitungsprozesse abgebaut oder aufgelöst werden.

Zur Erzeugung der virtuellen Repräsentation des Objekts (z.B. Modell) kann das Objekt, insbesondere ein hochpräzise gefertigtes Referenzobjekt, vermessen und die Messdaten verarbeitet werden. So kann z.B. die räumliche Ausdehnung oder die äussere Form messend erfasst werden. Die Modellerstellung kann hierdurch präziser und "nahe an der Realität" erfolgen. Die virtuelle Repräsentation bildet die Basis zur Durchführung der Schwingungssimulation am Objekt.

Als Objektzustand oder Objekteigenschaft, die einer bestimmten oder einer Mehrzahl von Eigenfrequenzen zuordenbar ist, kommt zumindest eine oder eine Kombination der folgenden, nicht abschliessend benannten Eigenschaften in Frage:
- Steifigkeit zumindest eines Teils des Objekts,
- Integrität der Materialverbindung (z.B. Rissbildung),
- Materialzustand,
- Materialbeschaffenheit,
- Materialzusammensetzung,
- Materialbeanspruchung (z.B. Defekte im Material),
- lokale Materialgeometrien, z.B. Wandstärke,
- Porosität im Körperinneren,
- Riss- oder Lochbildung,
- Dämpfungscharakteristik,
- geometrische Sollparameter bzw. Abweichungen davon.

In einer weiteren Ausführungsform können Objektparameter für die Erzeugung der virtuellen Repräsentation des Objekts basierend auf einem Vergleich eines ersten gemessenen und eines zweiten simulierten frequenzabhängigen Eigenschwingverhaltens bzw. Referenzeigenschwingverhaltens eines Referenzobjekts angepasst werden. Hierdurch kann die Simulation für die Berechnung des Referenzeigenschwingverhaltens des Objekts angepasst und an die realen Fertigungseigenschaften angeglichen werden. Zu diesem Zweck kann das Referenzobjekt unter bestimmten, idealen Produktionsvoraussetzungen aufgebaut werden.

Die Erfindung betrifft zudem ein Produktionsverfahren zur Erzeugung bzw. Herstellung eines metallhaltigen Objekts unter Verwendung einer Objektanalyse wie oben beschrieben. Das Produktionsverfahren weist zumindest die folgenden Schritte auf:
- ein Erhalten, insbesondere Erzeugen, von das Objekt repräsentierenden digitalen Modelldaten,
- ein punkt- oder schichtweises Fertigen des Objekts basierend auf den Modelldaten durch punkt- oder schichtweises Applizieren (Auftragen) und/oder Abtragen eines Fertigungsmaterials.

Das Objekt kann beispielsweise mittels punkt- oder schichtweisem Bereitstellen des Fertigungsmaterials (d.h. das Material wird für die zu produzierende Schicht bereitgestellt) in definierter Menge und mittels zumindest partiellem, positionsgenauem Umformen des bereitgestellten Fertigungsmaterials, insbesondere durch partielles Aufschmelzen des Fertigungsmaterials aufgebaut werden. Das Material kann in Form eine Fadens oder Drahts oder aber als pulver- oder granulatförmiges (z.B. metallhaltig) Fertigungsmaterial bereitgehalten werden. Das Umformen kann mittels gerichteter Laserstrahlung erfolgen.

Insbesondere kann das Verfahren der Laser Metal Deposition (LMD), Laserauftragsschweissen, Anwendung finden.
- ein Durchführen eines obigen Verfahrens zur Objektanalyse, mit
   - Messen eines frequenzabhängigen Eigenschwingverhaltens des Objekts durch dynamisch-mechanisches Anregen des Objekts in einem definierten Frequenzbereich, wobei das Anregen des Objekts mittels Erzeugen einer Körperschwingung durch Anlegen eines Testsignals erfolgt, und
   - Erfassen einer in dem Objekt aufgrund des Anregens erzeugten Körperschwingung, insbesondere einer ersten Eigenresonanz,
   - Simulieren oder Messen eines frequenzabhängigen Referenzeigenschwingverhaltens für das Objekt durch Erzeugen eines 3D Modells als virtuelle digitale Repräsentation des Objekts oder Bereitstellen eines körperlichen Referenzobjekts, durch simuliertes dynamisches bzw. dynamisch-mechanisches Anregen des Objekts bzw. Referenzobjekts,
   - Berechnen bzw. Erfassen der in dem Objekt bzw. Referenzobjekt aufgrund des Anregens erzeugten Körperschwingung, und
   - Ableiten eines Objektzustands basierend auf einem Vergleich des gemessenen Eigenschwingverhaltens und des frequenzabhängigen Referenzeigenschwingverhaltens.
- ein Ableiten einer Ausprägung einer spezifischen fertigungsbedingten Objekteigenschaft basierend auf dem Objektzustand.

Für eine derartige additive Fertigung kann nach dem Schritt des Umformens (Verbindens) des pulverförmigen Materials ein Abtrag des noch pulverförmig vorliegenden Materials erfolgen. Ausserdem können weitere Prozessschritte ausgeführt werden, wie z.B. eine Wärmebehandlung oder konventionelle mechanische Bearbeitung des Objekts. Mittels einer Wärmebehandlung können in dem Objekt durch die Fertigung entstandene Spannungen abgebaut werden.

Die Resonanzmessmethode kann in Verbindung mit unterschiedlichen Prozessschritten ausgeführt werden. D.h. eine solche Messung kann nicht nur nach abgeschlossenem 3D-Druck-Verfahren erfolgen, sondern beispielsweise nach einer Wärme-Behandlung des Objekts. Die Methode auch zudem mehrfach angewandt werden. Hierdurch können z.B. Veränderungen beurteilt werden, welche durch die Wärmebehandlung entstanden sind.

Andererseits kann die Messmethode auch ausgeführt werden, um Simulations-Modelle besser der Realität anzunähern - z.B. während einer Serien-Vermessung um parallel und nebst Qualitätssicherung auch eine Variationsvielfalt mit einer Simulation treffsicher abbilden zu können.

In einer Ausführungsform kann in dem Produktionsverfahren basierend auf einem Vergleich eines gemessenen Eigenschwingverhaltens und eines simulierten Referenzeigenschwingverhaltens für den bestimmten Frequenzbereich oder für die bestimmte Resonanzfrequenz eine Information bezüglich eines Übereinstimmungsniveaus einer für die additive Fertigung spezifischen Objekteigenschaft mit einer Soll-Objekteigenschaft abgeleitet wird. Hierzu kann spezifischen Charakteristika des Eigenschwingverhaltens, z.B. einem bestimmten Resonanzpeak, eine für den 3D-Druck typische Fertigungseigenschaft zugeschrieben werden. Eine derartige Objekteigenschaft kann beispielsweise eine Verdichtung (oder ein Verdichtungsfaktor) des aus dem pulverförmigen Zustand in einen fest-verbundenen Zustand überführten Fertigungsmaterials sein.

Das Fertigungsmaterial wird zur Verfestigung, d.h. für die Umwandlung von einem Pulver zu einer verbunden Struktur, zumindest punktuell und zeitweise einer erhöhten Temperatur (Wärmeeintrag) ausgesetzt. Hierdurch findet typischerweise nicht nur eine Verbindung des Pulvers sondern darüber hinaus auch eine Änderung der Materialzustands auf chemischer Ebene statt (z.B. Oxidation). Eine solche Eigenschaft kann ebenfalls als eine für die additive Fertigung spezifische Objekteigenschaft hinterlegt und geprüft werden.

Insbesondere kann eine Steifigkeitsinformation für das Objekt basierend auf dem ersten gemessenen frequenzabhängigen Eigenschwingverhalten abgeleitet werden und eine für die generative Fertigung spezifische Fertigungsqualität anhand der Steifigkeitsinformation bestimmt werden, insbesondere anhand des Vergleichs des gemessenen und des simulierten frequenzabhängigen Referenzeigenschwingverhaltens.

Gemäss einer weiteren Ausführungsform ist das Objekt gemäss der digitalen Modelldaten zumindest teilweise in Leichtbauweise gefertigt und weist zumindest einen durch das verfestigte Fertigungsmaterial definierten Objektabschnitt auf, der einen, insbesondere abgeschlossenen und/oder gasgefüllten, Hohlraum bereitstellt, wobei der Objektabschnitt hohlzylindrisch oder rohrförmig ausgeformt ist und/oder der Hohlraum eine innere Stabilisierungsstruktur aufweist, insbesondere mechanisch stabilisierende steg- oder gitterartige Struktur.

Eine Leichtbaustruktur mit einer inneren, versteifenden Struktur kann mittels einer generativen (additiven) Fertigung für verhältnismässig kleine Bauteile gezielt und genau aufgebaut werden. Solche teils filigrane inneren Strukturen sind häufig mit anderen Fertigungsverfahren nicht erreichbar. Die additive Fertigung bietet hierbei den weiteren Vorteil, dass die innere Struktur punktgenau, z.B. gitterartig, aufgebaut werden kann und damit einerseits eine hohe Stabilität herstellbar ist und zudem eine deutliche Gewichtsreduktion (im Vergleich mit herkömmlich hergestellten Teilen gleicher Dimensionierung) erzielbar ist. Entscheidend hierbei bliebt jedoch, dass die Innenkonstruktion (versteifende Struktur im Körperinneren) durchgehend zusammenhängend und den Vorgaben entsprechend verfestigt ist. Die Prüfbarkeit dieser Eigenschaften wird durch den vorgeschlagenen erfindungsgemässen Ansatz bereitgestellt.

Insbesondere betrifft die fertigungsbedingte Objekteigenschaft den definierten Objektabschnitt der Leichtbauweise, d.h. dass z.B. (nur) ein kritischer Teil des Objekts in Leichtbauweise ausgebildet werden soll und dessen korrekte Fertigung durch Prüfung sichergestellt werden soll.

Bei der Fertigung von derartigen Strukturen ist die Stabilität und Belastbarkeit des Bauteils typischerweise massgebend von inneren Strukturelementen bestimmt. Die Beschaffenheit dieser Elemente ist nach einem abgeschlossenen additiven Fertigungsprozess mit herkömmlichen Verfahren schwierig zu überprüfen. Der erfindungsgemässe Ansatz mittels einer Resonanzanalyse eines solchen Objekts und dem Vergleich mit einem Sollspektrum mit zugeordneten Objekteigenschaften macht das additiv gefertigte Leichtbauobjekt einer Qualitätsprüfung zugänglich.

Gemäss einer Ausführungsform kann die abgeleitete Ausprägung einer spezifischen fertigungsbedingten Objekteigenschaft als Feedback für das additive Fertigen des Objekts zugeführt werden und eine entsprechende Anpassung des additiven Fertigens, insbesondere der Modelldaten, erfolgen.

Die Erfindung betrifft ferner ein Prüfsystem für punkt- oder schichtweise (z.B. additiv) gefertigte, metallische Objekte, mit einer Prüfeinheit, die zur dynamisch-mechanischen Prüfung des mittels punkt- oder schichtweiser, insbesondere additiver, Fertigung erzeugten Objekts und zur darauf basierenden Ableitung eines ersten Objektzustands ausgebildet ist. Die Prüfeinheit weist einen Schwingungserzeuger und einen Schwingungsaufnehmer auf und ist derart ausgebildet, dass das additiv gefertigte Objekt über einen definierten Frequenzbereich dynamisch-mechanisch anregbar ist, wobei mittels Anlegen eines Testsignals durch den Schwingungserzeuger eine Körperschwingung erzeugbar ist, dass in dem Objekt aufgrund des Testsignals erzeugte Körperschwingungen, insbesondere Resonanzen, durch den Schwingungsaufnehmer erfassbar sind, und dass ein erstes frequenzabhängiges Eigenschwingverhalten für das Objekt anhand der erfassten Körperschwingungen ableitbar ist.

Das Prüfsystem weist zudem eine erste Steuerungs- und Verarbeitungseinheit auf, die zur Steuerung der Prüfeinheit ausgebildet ist.

Die erste Steuerungs- und Verarbeitungseinheit ist ferner ausgebildet zum (algorithmischen) Vergleich des frequenzabhängigen (gemessenen) Eigenschwingverhaltens mit einem frequenzabhängigen (z.B. simuliertem) Referenzeigenschwingverhalten, wobei das frequenzabhängige Referenzeigenschwingverhalten mittels einer virtuellen Repräsentation des Objekts und mittels Durchführung einer Finite Elemente Analyse abgeleitet ist. Das frequenzabhängige Referenzeigenschwingverhalten ist mit einer simulierten dynamischen Anregung der virtuellen Repräsentation in einen mit dem definierten Frequenzbereich zumindest überlappenden virtuellen Frequenzbereich und mit einer Berechnung einer in dem Objekt aufgrund des simulierten Anregens erzeugten virtuellen Körperschwingung bestimmbar.

Die erste Steuerungs- und Verarbeitungseinheit ist ausserdem ausgebildet zur Ableitung einer Information bezüglich eines Übereinstimmungsniveaus zwischen dem ersten Eigenschwingverhalten und dem frequenzabhängigen Referenzeigenschwingverhalten, und zur Ausgabe der abgeleiteten Information.

In einer Weiterbildung des obigen Systems betrifft die Erfindung zudem ein System zur geprüften punkt- oder schichtweisen, insbesondere additiven, Fertigung eines Objekts mit einem solchen Prüfsystem. In der Weiterbildung weist das System ferner eine Fertigungseinheit auf, die zur punkt- oder schichtweisen, insbesondere additiven, Fertigung des Objekts basierend auf metallhaltigem, pulver- und/oder granulatförmigem Fertigungsmaterial ausgebildet ist, insbesondere 3D-Drucker.

Die punkt- oder schichtweise Fertigung ist beispielsweise ausführbar mittels wiederholtem Applizieren und/oder Abtragen einer Schicht eines metallhaltigen, pulver- oder granulatförmigen (losen) oder soliden (z.B. drahtförmigen) Fertigungsmaterials definierter Dicke auf einer definierten Fertigungsfläche, und z.B. mittels zumindest bezüglich der Fertigungsfläche partiellem Verfestigen des Fertigungsmaterials, insbesondere durch partielles Schmelzen des Fertigungsmaterials, beispielsweise mittels gerichteter Laserstrahlung.

Eine zweite Steuerungs- und Verarbeitungseinheit ist zur Steuerung der Fertigung des Objekts mittels der Fertigungseinheit basierend auf digitalen Modelldaten für das Objekt ausgebildet. Die virtuelle Repräsentation des Objekts ist basierend auf den digitalen Modelldaten für das Objekt erzeugt.

In anderen Worten erfolgen die Fertigung des Objekts und die Simulation der Schwingungscharakteristik des Objekts auf einer gemeinsamen Datenbasis.

Die ersten und die zweite Steuerungseinheit können als Subeinheiten, insbesondere als algorithmisch implementierte Subprozesse, in einer gemeinsamen Steuerungs- und Verarbeitungseinheit ausgebildet und eingerichtet sein.

Die Erfindung betrifft zudem ein Computerprogrammprodukt, umfassend Befehle, die bewirken, dass das zuvor beschriebene Prüfsystem die zuvor beschriebenen Verfahrensschritte ausführt. Das Computerprogrammprodukt kann auf einer Steuerungs- und Verarbeitungseinheit eines obigen Prüfsystems ausgeführt werden.

Das Computerprogrammprodukt kann somit sämtliche Algorithmen umfassen, die die Steuerung bestimmter Schritte oder auch die direkten Durchführung einzelner Schritte (z.B. Erstellung oder Berechung an einem digitalen Modell des Objekts) ermöglichen.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: schematisch einen Aufbau für eine erfindungsgemässe Prüfmethode;
- Figs. 2a-b: Ausführungsformen für ein Spannelement zur Befestigung oder Lagerung des zu prüfenden Teils mit einer Schwingungsmessvorrichtung;
- Figs. 3a-b: ein gemessenes Frequenzspektrum mit Referenzspektrum gemäss der Erfindung; und
- Figs. 4a-b: eine Veranschaulichung eines erfindungsgemässen Prinzips einer Objektprüfung.

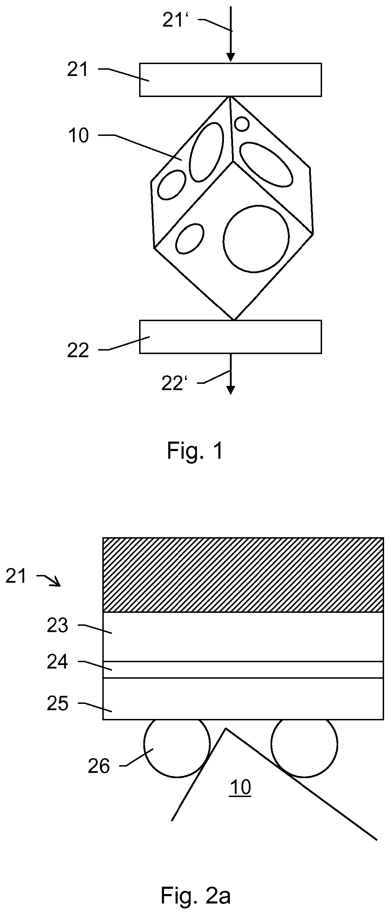

Figur 1 zeigt schematisch einen Aufbau einer erfindungsgemässen Prüfmethode. Das zu prüfende Objekt 10 wird in eine dafür ausgelegte Prüfvorrichtung zwischen zwei Spannelemente 21,22 eingespannt. Die Spannelemente 21,22 können beispielsweise als Drei-Punkt-Aufnahmen, Platten und/oder elastische Elemente ausgebildet sein.

Durch die Anordnung von zwei Drei-Punkt-Aufnahmen, d.h. eine solche Aufnahme pro Spannelemente 21,22, kann eine präzise Repositionierung des einen oder vieler solcher zu messender Objekte 20 bereitgestellt werden. Zudem kann eine Deformation des Objekts 10 beim Einspannen und Entnehmen vermieden werden. Eine Drei-Punkt-Aufnahme kann z.B. durch drei kugelförmige Elemente gebildet werden.

Zur Messung von Eigenschwingungen und Eigenresonanzen des Objekts 10 wird an einem ersten eingespannten Ende des Objekts 10 eine Schwingung mit bestimmter Frequenz und Amplitude induziert. Die Schwingung wird hier z.B. durch das Spannelement 21 aufgebracht. Hierzu kann das Spannelement 21 selbst einen Schwingungserzeuger aufweisen oder mit einem solchen mechanisch gekoppelt sein und zur Weiterleitung der induzierten Schwingung ausgelegt sein.

An einem zweiten, insbesondere gegenüberliegenden, Ende des Objekts 10 werden die durch die induzierte Schwingung in dem zu prüfenden Körper erzeugten Körperschwingungen und Resonanzen mittels eines Schwingungssaufnehmers erfasst. Das zweite Spannelement 22 ist hierzu mit einem solchen Schwingungssaufnehmer versehen oder damit gekoppelt. Neben einer gegenüberliegenden Anordnung sind auch alternative Anordnungen von Schwingungserzeuger und Schwingungsaufnehmer denkbar.

Die Vorrichtung ist so konzipiert, dass die elektromagnetischen oder elektromechanischen Schwingungsüberträger oder Schwingungsumformer (Schwingungserzeuger und Schwingungssaufnehmer) zusammen mit dem Objekt 10 von jeglicher weiterer Rahmen- oder Haltekonstruktion mechanisch entkoppelt bzw. dynamisch isoliert sind. Dies wird beispielsweise realisiert, indem ein Verbindungselement (zwischen Haltekonstruktion und Spannelement) mit einer deutlich unterschiedlichen Resonanz eingesetzt wird. Hierdurch kann ein Energieübertrag von oder zu einer umgebenden Struktur weitgehend oder gänzlich vermieden werden.

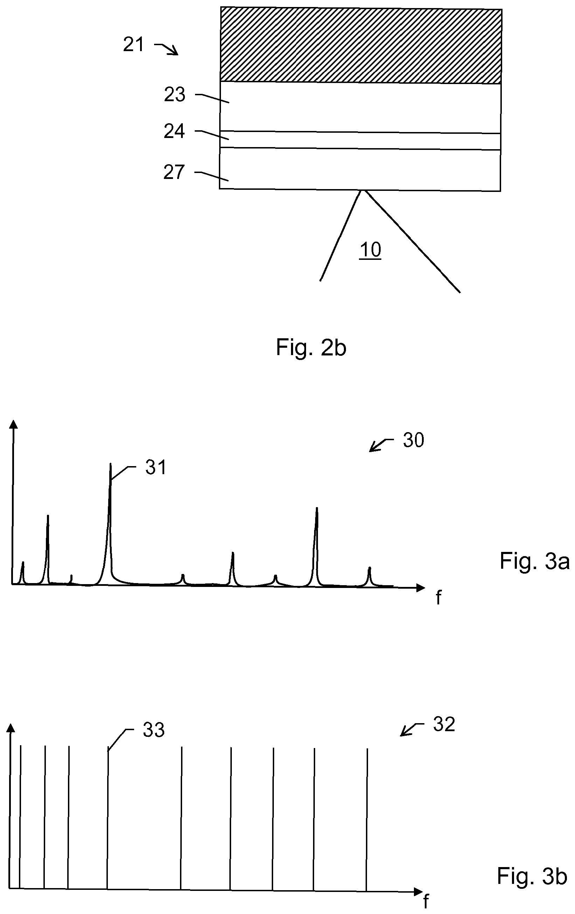

Vorzugsweise weist ein Schwingungsumformer ein Piezoelement (z.B. eine piezoelektrische Platte) auf oder ist als solches ausgebildet, wobei dieses z.B. eine Dicke von ca. 2mm aufweist. Das Piezoelement ist insbesondere mit einem Probenhalter verbunden (siehe Figuren 2a und 2b).

Eine Resonanzmessung (Modal-Analyse) kann auch mit anderen Ansätzen als mit der Verwendung von Piezoelementen durchgeführt werden. Beispielsweise können alternativ ein Laser-Doppler-Vibrometer (zur Erfassung) und eine "voicecoil" Shaker-Anregung (zur Anregung) vorgesehen sein. Zudem kann über einfache Impulse angeregt werden.

Das Anregen des Objekts 10 erfolgt im gezeigten Beispiel mittels Anlegen eines Signals 21' an das erste Spannelement 21. Das Signal 21' kann durch einen Frequenzgenerator erzeugt, anschliessend verstärkt und an das Piezoelement übertragen werden.

Die Anregung kann beispielsweise mittels einer harmonischen Anregung erfolgen. Hierbei wird das gewünschte Schwingungsspektrum in einzelnen Frequenzschritten erfasst. Vorzugsweise wird ein harmonisches, sinusförmiges Signal angelegt. Ein Phasenversatz und/oder eine Signalverstärkung (z.B. resonantes Aufschwingen) werden anhand von erhaltenen Sensorsignalen bestimmt.

Eine weitere Anregungsmöglichkeit bildet das Durchstimmen oder Durchlaufen von Frequenzen (Sweep oder Chirp). Hierbei wird nicht Schritt für Schritt eine jeweilige Messung vorgenommen, sondern die Anregungsfrequenz wird über einen definierten Bereich verändert während zugleich die Schwingungsantwort des Objekts gemessen wird. Dies erlaubt eine Erfassung des gewünschten Messbereichs (Frequenzspektrum) in kürzerer Zeit.

Alternativ kann die Anregung mittels einer so genannten Hammer-Methode erfolgen. Hierbei können Körperschwingungen im Objekt durch einen (einzelnen) Impuls (z.B. Stoss, Hammerschlag oder Rauschen) breitbandig angeregt werden.

Die Verbindung des Piezoelements mit dem Probenhalter oder auch mit dem das Piezoelement tragenden oder haltenden Element (Haltestruktur) kann beispielsweise mittels Löten (Weichlöten) oder durch Verkleben hergestellt werden.

Insbesondere erfolgt eine Kalibrierung des Messaufbaus mit einem Referenzkörper, z.B. einem Würfel mit definierter Kantenlänge und definierten Eigenfrequenzen, vorzugsweise über 100 kHz, wodurch der Würfel ein geeignetes Koppelelement zur Messung und Kalibrierung in kleineren Frequenzbereichen darstellt. Der Würfel ist z.B. aus Aluminium gefertigt und weist eine Kantenlänge von 12 mm auf. Zudem kann der Würfel zur elektrischen Isolierung (schwarz) anodisiert werden.

Figur 2a zeigt eine erste Ausführungsform für ein Spannelement 21 zur Befestigung oder Lagerung des zu prüfenden Teils 10 mit einer Schwingungsmessvorrichtung. Das Spannelement 21 weist eine Halterung 23 auf, die eine Verbindung mit einer Haltestruktur bereitstellt. An die Halterung 23 ist ein Piezoelement 24 zur Erzeugung oder Aufnahme von Schwingungen gekoppelt. Ein Probenhalter 25 mit drei sphärischen Elementen 26 ist mit dem Piezoelement 24 verbunden und stellt eine Übertragung von Schwingungen zwischen Piezoelement 24 und Messobjekt 10 bereit. Durch die mit kugelförmigen Elementen 25 definierte Drei-Punkt-Aufnahme kann das Objekt präzise und wiederholbar zur Messung eingespannt werden.

Figur 2b zeigt eine zweite Ausführungsform für ein Spannelement 21 zur Befestigung oder Lagerung des zu prüfenden Teils 10 mit einer Schwingungsmessvorrichtung. Das Spannelement 21 nach Figur 2b unterscheidet sich von demjenigen aus Figur 2a dadurch, dass die Drei-Punkt-Aufnahme durch eine plattenförmige Aufnahme 27 ersetzt ist. Diese Variante des Spannelements 21 erlaubt ein schnelles und flexibles einspannen das Objekts oder von Objekten unterschiedlicher Dimensionierung.

Figur 3a zeigt ein mit beispielsweise einer Anordnung nach Figur 1 erfasstes Frequenzspektrum 30 für ein gemessenes Objekt. Damit ist das Eigenschwingverhalten für das Objekt über einen definierten Frequenzbereich frequenzabhängig erfasst. Es versteht sich, dass alternativ oder zusätzlich der Phasenverlauf aufgenommen und anhand von erfassten Phasensprüngen auf die Existenz von lokalen Eigenfrequenzen geschlossen werden kann (nicht dargestellt).

Vor Durchführung der Messung an einem Prüfobjekt wurde das System mittels eines Kalibrierköpers zumindest für den zu erfassenden Messbereich kalibriert, d.h. das Schwingungsverhalten des Aufbaus, insbesondere objektunabhängig, wurde für diesen Bereich ermittelt.

Der gemessene Frequenzbereich erstreckt sich ca. von 500Hz, insbesondere 10kHz, bis 80kHz, insbesondere 24kHz. Die untere Frequenzgrenze ist durch die verfügbare Bandbreite des verwendeten Verstärkers gegeben. Die obere Frequenzgrenze ist durch das dynamische Verhalten des Setups gegeben.

Das Spektrum kann wahlweise mit oder ohne eine Dämpfung erfasst werden, wobei die Verteilung der Orte der Eigenfrequenzen signifikant bleibt jedoch die Anregungen im Körper mit unterschiedlichen Verstärkungsfaktoren festgestellt werden können.

Aufgrund einer Breite eines Resonanzausschlages kann eine Dämpfung zunächst gemessen und anschliessend die wahre Resonanzfrequenz unter Berücksichtigung der Dämpfung berechnet werden. Alternativ kann die Dämpfung in ein FEM-Modell integriert oder in Abhängigkeit geforderter Genauigkeiten auch vernachlässigt werden.

Im Ergebnis wird ein Spektrum 30 erzeugt, wobei jeweilige Schwingungsamplituden bzw. -verstärkungen über einen bestimmten Frequenzbereich f erfasst sind. In diesem Spektrum 30 sind einzelne Eigenfrequenzen des geprüften Objekts identifizierbar. Beispielhaft ist eine erste Eigenresonanz 31 bei einer Frequenz von ca. 12'500 Hz referenziert. Eine solche Eigenfrequenz vermag eine charakteristische Eigenschaft des Objekts zu repräsentieren. Beispielsweise kann durch die Messung der Frequenz und durch Abgleich mit einem zuvor bestimmten Frequenzatlas oder Soll-Frequenzspektrum für das Objekt eine Information über eine mit der spezifischen Eigenfrequenz verknüpften mechanischen Objekteigenschaft gewonnen werden.

Für eine Gewinnung einer derartigen Objektinformation kann auch eine relative Frequenzinformation genutzt werden. Hierbei werden beispielsweise Abstände von gemessenen Frequenzen zu einer Referenzfrequenz und/oder Abstände zwischen einzelnen gemessenen Frequenzen herangezogen. Anhand eines so feststellbaren Abstands kann entsprechend eine Information zu dieser Objekteigenschaft abgeleitet werden. Zudem kann hierdurch ein Vergleich, eine Bewertung und/oder Anpassung einer Simulation im Verhältnis zur Realität durchgeführt werden. Auch kann aus dem Verhältnis zwischen einer Referenz und einer ausgeführten Messung eine Information abgeleitet werden.

Neben der Auswertung von Frequenzen können alternativ oder zusätzlich relative Amplituden und/oder Dämpfungsverhalten analysiert werden. Durch ein zusätzliches Heranziehen dieser Parameter kann eine weitere Verfeinerung der Messung erreicht werden.

Ein Frequenzatlas oder Soll-Frequenzspektrum für einen bestimmten Objekttyp kann z.B. durch mehrmaliges Messen eines oder mehrerer Referenzobjekte abgeleitet werden, wobei die Referenzobjekte jeweils möglichst gut mit einem ideal gefertigten Objekt korrelieren. Alternativ kann das Soll-Frequenzspektrum basierend auf einer Simulation an einer virtuellen Repräsentation für das Objekt abgeleitet werden. Hierbei können einzelne signifikante Frequenzen für ein Objekt bestimmt werden, wie dies beispielsweise in Figur 3b gezeigt ist.

Das Referenzspektrum 32 (Referenzfrequenzatlas oder Soll-Frequenzspektrum) gibt an, bei welchen Frequenzen oder Frequenzbändern das additiv gefertigte und zu prüfende Objekt eine Resonanz bzw. entsprechend überhöhte Frequenzantwort aufweisen sollte. Beispielhaft ist hier wiederum eine bestimmte Referenzfrequenz 33 bei ca. 12'500 Hz bezeichnet. Bei der Messung der Schwingungsantwort des Objekts ist primär die jeweils bestimmte Frequenz relevant, die für diese Frequenz gemessene absolute Stärke der Körperschwingung bleibt von sekundärer Bedeutung.

Erfindungsgemäss kann eine Zuordnung spezifischer Objekteigenschaften mittels Simulationen basierend auf virtuellen Objektmodellen mit unterschiedlichen Objektparametern oder hinterlegten Objekteigenschaften erfolgen. Hierzu wird beispielsweise eine erste digitale Repräsentation des Objekts als digitales Modell erzeugt und dieses Modell mit definierten Modelleigenschaften, z.B. einer lokalen Steifigkeit des Objekts, versehen. Eine erste Simulation mit dieser ersten digitalen Repräsentation liefert dann erste signifikante Eigenfrequenzen für das Objekt. Zudem wird eine zweite Repräsentation des Objekts mit anderen spezifisch veränderten Modelleigenschaften, z.B. einer (nur) veränderten lokalen Steifigkeit, erzeugt. Wiederum erfolgt eine Simulation hinsichtlich zweiter signifikanter Eigenfrequenzen. Ein Unterschied zwischen den ersten und den zweiten berechneten Eigenfrequenzen kann dann der entsprechenden Änderung der Modelleigenschaft, z.B. lokalen Steifigkeit, zugeordnet werden.

Andererseits, ebenfalls erfindungsgemäss, kann eine Zuordnung spezifischer Objekteigenschaften zu Eigenfrequenzen durch eine gezielte Manipulation eines Referenzobjekts erfolgen. Das Objekt wird hierfür vor und nach der Manipulation hinsichtlich der Schwingungseigenschaften vermessen. Allfällige Unterschiede in den Frequenzspektren können dann der Manipulation zugeordnet werden. So kann z.B. in Kenntnis eines gehäuften Auftretens eines bestimmten Materialrisses bei der Fertigung dieser Fehler gezielt nachgebildet und dessen Auswirkung auf die Eigenschwingungen des Objekts abgeleitet werden. Es versteht sich, dass derartige Manipulationen mehrfach und für unterschiedliche Fertigungscharakteristika durchgeführt werden können und damit eine entsprechend breite Datenbasis hinterlegt werden kann.

Mit solch einer Datenbasis wird es möglich, anhand einer Resonanzmessung an einem Objekt auf dessen physikalischmechanischen Eigenschaften, wie beispielsweise Steifigkeit, lokale Dichte, strukturelle Integrität, Risse oder Porosität im Körperinneren, zu schliessen. Es kann also mit einer einzelnen Messung an einem additiv gefertigten Objekt eine Mehrzahl von Informationen über den Objektzustand auch in dessen Innerem teilweise gleichzeitig zugänglich werden.

Der hiermit generierbare Informationsgehalt ist somit insbesondere für additiv gefertigte, metallische Objekte von Vorteil. Fertigungsmerkmale, die mit herkömmlichen Methoden bislang nicht erkennbar oder nicht zuzuordnen waren, können anhand der vorliegenden Erfindung eindeutig identifiziert werden. In anderen Worten, können Fertigungsfehler nicht nur generell erkannt, sondern zudem lokalisiert und benannt werden. Bei additiv gefertigten (metallischen) Objekten treten derartige Fertigungsfehler insbesondere als nicht ausreichend verbundenes Fertigungsmaterial (d.h. beispielsweise metallischer Pulverwerkstoff, der nicht wie gewünscht verschmolzen bzw. verbunden ist) auf, wobei der Ort des Fehlers im Inneren eines Werkstücks befindlich ist. Auch Mikrorisse, ungewünschte Porositäten oder nur teilverschmolzenes Pulvermaterial zählen dazu, wobei diese Aufzählung nicht als abschliessend anzusehen ist.

Die erfindungsgemässe Methode zielt insbesondere auf Objekte ab, die aus einem metallhaltigen Grundwerkstoff und generativ mit einem Pulverbettverfahren aufgebaut sind. Hierzu zählen unter anderem das selektive Laserschmelzen, selektives Lasersintern oder Elektronenstrahlschmelzen. Gerade bei solchen Prozessen, deren Ausgangsmaterial körnig oder pulverförmig vorliegt, ist die Vermeidung und/oder Erkennung von Produktionsfehlern an nach der Fertigung nicht mehr unmittelbar zugänglichen Orten (z.B. im Inneren des Werkstücks) von Bedeutung. Stellen, ohne eine ausreichende Materialverbindung sind in Hinblick auf die strukturelle Qualität und Robustheit zu vermeiden. Mit dem erfindungsgemässen Verfahren kann eine gewünschte Produktionsqualität eines auf diese Wiese generativ gefertigten Teils erkannt und verifiziert werden. Z.B. sind nicht-oberflächliche Fehler im Produkt durch Messung erkennbar.

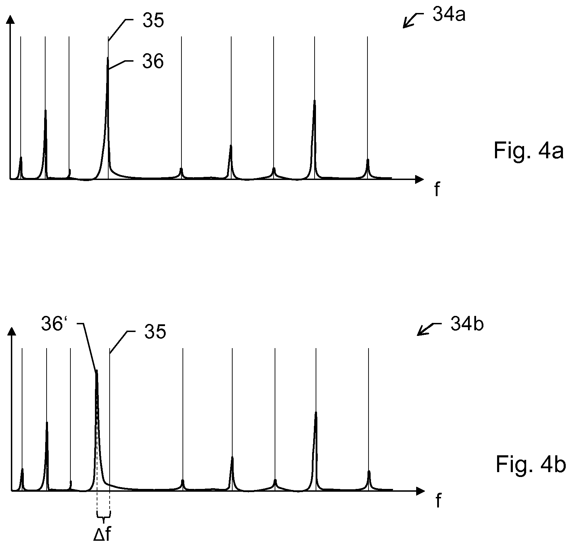

Die Figuren 4a und 4b veranschaulichen ein erfindungsgemässes Prinzip einer Objektprüfung. In Figur 4a ist ein Frequenzspektrum 34a für ein Objekt gezeigt, wobei sowohl die zu erwartenden Referenz-Eigenschwingungen für bestimmte Frequenzen in Form von vertikalen Linien als auch ein gemessenes Frequenzspektrum dargestellt ist. Wiederum ist beispielhaft eine Referenzresonanz 35 für das Objekt angegeben, die anhand einer Simulationen für ein Soll-Objekt abgeleitet ist. Ferner ist dieser Referenzresonanz 35 eine bestimmte Objekteigenschaft zugeordnet, hier die Nicht-Existenz eines Risses im bereits verbundenen Fertigungsmaterial an einer bestimmten Stelle des Objekts.

Der gemessene Schwingungspeak 36 im Spektrum kann bezüglich dessen Frequenz eindeutig der Referenzresonanz 35 zugeordnet werden, was wiederum ein Hinweis auf die korrekte Fertigung, d.h. ohne Rissbildung, des Objekts ist. Dies ist aus der Übereinstimmung der Mittenfrequenz des Peaks 36 und der simulierten Referenzresonanz 35 ableitbar. Für die Übereinstimmung kann ein Toleranzbereich definiert werden, d.h. es muss nicht zwingend eine exakte Übereinstimmung festgestellt werden, sondern die gemessene Mittenfrequenz darf beispielsweise um maximal 10 Hz, 20 Hz oder 30 Hz von der simulierten Referenzresonanz 35 abweichen, wobei immer noch von einer korrekten Fertigung des Objekts ausgegangen werden kann. Es versteht sich, dass die Breite eins solchen Toleranzbereichs von dem jeweils zu erkennendem Fertigungsmerkmal abhängt und z.B. für einen zu erkennenden Riss sich deutlich unterscheidet von einer Toleranz für eine zu messende Steifigkeit des Objekts.

Neben der Erkennung einer Rissbildung können mit obigem Ansatz auch andere Produktionsfehler, wie z.B. Porenbildung, Porengrösse oder eine Beschaffenheit des Metallgefüges, identifiziert werden.

Figur 4b zeigt das Ergebnis einer weiteren Durchführung einer erfindungsgemässen Objektprüfung. Das hinterlegte Referenzspektrum entspricht demjenigen der Figur 4a. Die Resonanzmessung wurde an einem anderen Objekt vorgenommen.

Das gemessene Frequenzspektrum für das nun geprüfte Objekt unterscheidet sich insbesondre hinsichtlich der Lage des Peaks 36' von demjenigen der Figur 4a. Die mit dem Signal 36' identifizierte Resonanzfrequenz unterscheidet sich um eine Frequenzdifferenz Δf signifikant von der Referenzresonanz 35, d.h. die gemessene Frequenz liegt ausserhalb der Toleranz um die Referenzresonanz 35.

Für das geprüfte Objekt, zu welchem das Spektrum 34b ermittelt wurde, kann nun allein anhand der durchgeführten Messung festgestellt werden, dass das Objekt einen Riss (oder einen anderen spezifisch zugeordneten Produktionsfehler) an bekannter Stelle aufweist, da das Auftreten dieses Risses mit einer Abweichung bezüglich der Referenzresonanz 35 verbunden ist. Weitere Messungen oder Prüfungen das Objekt werden hierdurch überflüssig. Das Objekt kann hierdurch schnell als fehlerbehaftet und somit als Ausschuss markiert werden.

Die erfindungsgemässe Methode erlaubt nicht nur ein Erkennen von möglichen Produktionsfehlern, sondern stellt zudem eine Mittel bereit, den Fertigungsprozess selbst entsprechend anzupassen. Mit anderen Worten kann das Prüfergebnis dem Fertigungsprozess als Feedback zugeführt und ein Ablauf der additiven Fertigung so angepasst werden, dass die Wahrscheinlichkeit eines Eintretens eines spezifischen Produktionsfehlers verringert werden kann. Wird beispielsweise vermehrt eine Rissbildung an einer bestimmten Stelle festgestellt, kann selektiv an dieser Stelle eine grössere Menge Material oder das Material über einen längeren Zeitraum oder bei erhöhter Temperatur verschmolzen werden.

Das Projekt, das zu der vorliegenden Patentanmeldung geführt hat, hat eine Finanzierung seitens des EU-Programms für Forschung und Innovation "Horizon 2020" unter der Zuschussvereinbarung Nr. 690689 erhalten.

Es versteht sich, dass die dargestellten Figuren nur mögliche Ausführungsbeispiele schematisch darstellen. Die verschiedenen Ansätze können erfindungsgemäss ebenso miteinander sowie mit Methoden der Modalanalyse oder zur Eigenschwingungsbestimmung des Stands der Technik kombiniert werden.

Der Schutzumfang der Erfindung wird durch die nachfolgenden Ansprüche definiert.

## Patentansprüche

1. Verfahren zur Objektanalyse mit
• Messen eines frequenzabhängigen
Eigenschwingverhaltens (30) eines additiv gefertigten Objekts (10) durch
□ dynamisch-mechanisches Anregen des Objekts (10) in einem definierten Frequenzbereich (f), wobei das Anregen des Objekts (10) mittels Erzeugen einer Körperschwingung durch Anlegen eines Testsignals (21') erfolgt, und
□ Erfassen einer in dem Objekt (10) aufgrund des Anregens erzeugten Körperschwingung, insbesondere einer ersten Eigenresonanz,
• Simulieren eines frequenzabhängigen
Referenzeigenschwingverhaltens (32) für das additiv gefertigte Objekt (10) durch
□ Erzeugen eines 3D Modells als virtuelle digitale Repräsentation des Objekts (10),
□ wobei Eigenspannungen im Objekt (10) simulativ oder per Referenzmessung in die virtuelle Repräsentation eingearbeitet werden,
□ Durchführen einer Finite Elemente Analyse basierend auf der virtuellen Repräsentation mit
· simuliertem dynamischen Anregen der virtuellen Repräsentation in einen mit dem definierten Frequenzbereich zumindest überlappenden virtuellen Frequenzbereich zur Erzeugung einer virtuellen Körperschwingung,
Berechnen der in dem Objekt (10) aufgrund des simulierten Anregens erzeugten virtuellen Körperschwingung, insbesondere einer zweiten Eigenresonanz, und
• Ableiten eines Objektzustands basierend auf einem Vergleich (34a,34b) des gemessenen Eigenschwingverhaltens (30) und des simulierten frequenzabhängigen Referenzeigenschwingverhaltens (30,32).

2. Verfahren nach Anspruch 1,
**dadurch gekennzeichnet, dass**
einem bestimmten Frequenzbereich oder einer bestimmten Resonanzfrequenz (31,33,35,36) eine spezifische Objekteigenschaft zugeordnet wird und der Objektzustand eine Information zu der spezifischen Objekteigenschaft aufweist.

3. Verfahren nach Anspruch 2,
**dadurch gekennzeichnet, dass**
die Objekteigenschaft zumindest eine aus der Liste der folgenden ist:
• Steifigkeit oder Elastizitätsmodul für zumindest einen Teil des additiv gefertigten Objekts,
• Integrität der Materialverbindung,
• Materialzustand,
• Materialbeschaffenheit,
• Materialzusammensetzung,
• Materialbeanspruchung,
• zumindest lokale Materialdimensionierung, insbesondere Wandstärke,
• Porosität,
• zumindest lokale Materialdichte,
• Dämpfungscharakteristik,
• geometrische Sollparameter.

4. Verfahren nach Anspruch 2 oder 3,
**dadurch gekennzeichnet, dass**
die Zuordnung basierend auf mehrfachem Simulieren des frequenzabhängigen Referenzeigenschwingverhaltens für das additiv gefertigte Objekt mit unterschiedlichen Objektparametern erfolgt, wobei die Objekteigenschaft durch eine Änderung zumindest eines Objektparameters insbesondere gezielt beeinflusst wird.

5. Verfahren nach einem der Ansprüche 1 bis 4,
**dadurch gekennzeichnet, dass**
basierend auf einem Vergleich des gemessenen Eigenschwingverhaltens (30) und des simulierten Referenzeigenschwingverhaltens (32) für einen bestimmten Frequenzbereich (f) oder in Bezug zu einer bestimmten Resonanzfrequenz (31,33,35,36) eine Information bezüglich eines Übereinstimmungsniveaus des Objektzustands oder einer Objekteigenschaft mit einem Soll-Objektzustand bzw. einer Soll-Objekteigenschaft abgeleitet wird.

6. Verfahren nach einem der Ansprüche 1 bis 5,
**gekennzeichnet durch**
ein Anpassen von Objektparametern für die Erzeugung der virtuellen Repräsentation des additiv gefertigten Objekts (10) basierend auf einem Vergleich des gemessenen Eigenschwingverhaltens und des simulierten frequenzabhängigen Referenzeigenschwingverhaltens eines Referenzobjekts.

7. Produktionsverfahren zur Erzeugung eines metallhaltigen Objekts (10) mit
• Erhalten von das Objekt (10) repräsentierenden digitalen Modelldaten,
• punkt- oder schichtweises, insbesondere additives, Fertigen des Objekts (10) basierend auf den Modelldaten durch punkt- oder schichtweises Applizieren und/oder Abtragen von Fertigungsmaterial,
• Durchführen eines Verfahrens zur Objektanalyse nach einem der Ansprüche 1 bis 6 mit dem Objekt, mit
□ Messen eines frequenzabhängigen Eigenschwingverhaltens (30) des Objekts (10) durch
dynamisch-mechanisches Anregen des Objekts (10) in einem definierten Frequenzbereich (f), wobei das Anregen des Objekts (10) mittels Erzeugen einer Körperschwingung durch Anlegen eines Testsignals (21') erfolgt, und
Erfassen einer in dem Objekt (10) aufgrund des Anregens erzeugten Körperschwingung, insbesondere einer ersten Eigenresonanz,
□ Simulieren oder Messen eines frequenzabhängigen Referenzeigenschwingverhaltens (32) für das Objekt (10) durch
Erzeugen eines 3D Modells als virtuelle digitale Repräsentation des Objekts (10), oder Bereitstellen eines körperlichen Referenzobjekts,
simuliertes dynamisches bzw. dynamisch-mechanisches Anregen des Objekts bzw. Referenzobjekts,
Berechnen bzw. Erfassen der in dem Objekt (10) bzw. Referenzobjekt aufgrund des Anregens erzeugten Körperschwingung, und
□ Ableiten eines Objektzustands basierend auf einem Vergleich (34a,34b) des gemessenen Eigenschwingverhaltens (30) und des frequenzabhängigen Referenzeigenschwingverhaltens (30,32), und
• Ableiten einer Ausprägung einer spezifischen fertigungsbedingten Objekteigenschaft basierend auf dem Objektzustand.

8. Produktionsverfahren nach Anspruch 7,
**dadurch gekennzeichnet, dass**
basierend auf einem Vergleich eines gemessenen Eigenschwingverhaltens (30) und eines simulierten Referenzeigenschwingverhaltens (32) für den bestimmten Frequenzbereich oder in Bezug zu einer bestimmten Resonanzfrequenz (31,33,35,36) eine Information bezüglich eines Übereinstimmungsniveaus einer für die additive Fertigung spezifischen Objekteigenschaft mit einer Soll-Objekteigenschaft abgeleitet wird.

9. Produktionsverfahren nach Anspruch 7 oder 8,
**gekennzeichnet durch**
• Ableiten einer Steifigkeitsinformation für das Objekt (10) basierend auf dem ersten gemessenen frequenzabhängigen Eigenschwingverhalten und
• Bestimmen einer Fertigungsqualität anhand der Steifigkeitsinformation, insbesondere anhand des Vergleichs des gemessenen Eigenschwingverhaltens und des frequenzabhängigen Referenzeigenschwingverhaltens.

10. Produktionsverfahren nach einem der Ansprüche 7 bis 9,
**dadurch gekennzeichnet, dass**
das Objekt (10) gemäss der digitalen Modelldaten zumindest teilweise in Leichtbauweise gefertigt ist und zumindest einen durch das verfestigte Fertigungsmaterial definierten Objektabschnitt aufweist, der einen, insbesondere abgeschlossenen und/oder gasgefüllten, Hohlraum bereitstellt,
wobei
• der Objektabschnitt hohlzylindrisch oder rohrförmig ausgeformt ist und/oder
• der Hohlraum eine innere Stabilisierungsstruktur aufweist, insbesondere mechanisch stabilisierende steg- oder gitterartige Struktur.

11. Produktionsverfahren nach einem der Ansprüche 7 bis 10,
**dadurch gekennzeichnet, dass**
die fertigungsbedingte Objekteigenschaft den definierten Objektabschnitt der Leichtbauweise betrifft.

12. Produktionsverfahren nach einem der Ansprüche 7 bis 11,
**dadurch gekennzeichnet, dass**
die abgeleitete Ausprägung einer spezifischen fertigungsbedingten Objekteigenschaft als Feedback für das additive Fertigen des Objekts (10) zugeführt wird und eine entsprechende Anpassung des additiven Fertigens, insbesondere der Modelldaten, erfolgt.

13. Prüfsystem für punkt- oder schichtweise, insbesondere additiv, gefertigte Objekte (10), mit
• einer Prüfeinheit, die zur dynamisch-mechanischen Prüfung eines mittels punkt- oder schichtweiser, insbesondere additiver, Fertigung erzeugten Objekts und zur darauf basierenden Ableitung eines ersten Objektzustands ausgebildet ist, wobei die Prüfeinheit
□einen Schwingungserzeuger (21) und
□ einen Schwingungsaufnehmer (22) aufweist und derart ausgebildet ist, dass
□ das punkt- oder schichtweise gefertigte Objekt (10) in einem definierten Frequenzbereich dynamisch-mechanisch anregbar ist, wobei mittels Anlegen eines Testsignals durch den Schwingungserzeuger (21) eine Körperschwingung erzeugbar ist,
□ in dem Objekt aufgrund des Testsignals erzeugte Körperschwingungen, insbesondere Eigenresonanzen, durch den Schwingungsaufnehmer (22) erfassbar sind und
□ ein frequenzabhängiges Eigenschwingverhalten (30) für das Objekt (10) anhand der erfassten Körperschwingungen ableitbar ist,
und
• einer ersten Steuerungs- und Verarbeitungseinheit, die zur Steuerung der Prüfeinheit ausgebildet ist, wobei die erste Steuerungs- und Verarbeitungseinheit ferner ausgebildet ist
• zum Vergleich des frequenzabhängigen
Eigenschwingverhaltens (30) mit einem frequenzabhängigen Referenzeigenschwingverhalten (32), wobei das Referenzeigenschwingverhalten (32) mittels eines 3D Modells als virtuelle Repräsentation des Objekts (10) und mittels Durchführung einer Finite Elemente Analyse mit
□ simulierter dynamischer Anregung der virtuellen Repräsentation in einen mit dem definierten Frequenzbereich zumindest überlappenden virtuellen Frequenzbereich,
□Berechnung einer in dem Objekt aufgrund des simulierten Anregens erzeugten virtuellen Körperschwingung, abgeleitet ist, wobei Eigenspannungen im Objekt (10) simulativ oder per Referenzmessung in die virtuelle Repräsentation eingearbeitet werden,
• zur Ableitung einer Information bezüglich eines Übereinstimmungsniveaus zwischen dem Eigenschwingverhalten und dem Referenzeigenschwingverhalten, und
• zur Ausgabe der abgeleiteten Information,
insbesondere wobei das Prüfsystem zur Ausführung eines Verfahrens zur Objektanalyse nach einem der Ansprüche 1 bis 6 ausgebildet ist.

14. System zur geprüften punkt- oder schichtweisen, insbesondere additiven, Fertigung eines Objekts (10) mit
• einem Prüfsystem nach Anspruch 13,
• einer Fertigungseinheit, die zur punkt- oder schichtweisen, insbesondere additiven, Fertigung des Objekts (10) ausgebildet ist, insbesondere basierend auf metallhaltigem, pulver- und/oder granulatförmigem Fertigungsmaterial, insbesondere 3D-Drucker, mittels wiederholtem punkt- oder schichtweisen Applizieren und/oder Abtragen von Fertigungsmaterial, und
• einer zweiten Steuerungs- und Verarbeitungseinheit, die zur Steuerung der Fertigung des Objekts (10) mittels der Fertigungseinheit basierend auf digitalen Modelldaten für das Objekt (10) ausgebildet ist,
**dadurch gekennzeichnet, dass**
die virtuelle Repräsentation des Objekts (10) basierend auf den digitalen Modelldaten für das Objekt (10) erzeugt ist, insbesondere wobei das System zur Ausführung eines Produktionsverfahrens nach einem der Ansprüche 7 bis 12 ausgebildet ist.

15. Computerprogrammprodukt, umfassend Befehle, die bewirken, dass das Prüfsystem gemäß Anspruch 13 die Verfahrensschritte nach Anspruch 1 ausführt.

## Claims

1. Method for object analysis comprising
• measuring a frequency-dependent natural oscillation behavior (30) of an additively manufactured object (10) by
□ dynamically-mechanically exciting the object (10) in a defined frequency range (f), wherein exciting the object (10) is carried out by means of generating a body oscillation by applying a test signal (21'), and
□ detecting a body oscillation generated in the object (10) on account of the exciting, in particular a first natural resonance,
• simulating a frequency-dependent reference natural oscillation behavior (32) for the additively manufactured object (10) by
□ generating a 3D model as a virtual digital representation of the object (10),
□wherein residual stresses in the object (10) are incorporated into the virtual representation simulatively or by reference measurement,
carrying out a finite element analysis on the basis of the virtual representation comprising dynamically exciting, in a simulated manner, the virtual representation into a virtual frequency range for generating a virtual body oscillation, said virtual frequency range at least overlapping the defined frequency range,
calculating the virtual body oscillation generated in the object (10) on account of the exciting in a simulated manner, in particular a second natural resonance, and
• deriving an object state on the basis of a comparison (34a,34b) of the measured natural oscillation behavior (30) and the simulated frequency-dependent reference natural oscillation behavior (30,32).

2. Method according to claim 1,
**characterized in that**
a specific object property is assigned to a specific frequency range or a specific resonant frequency (31,33,35,36) and the object state has information concerning the specific object property.

3. Method according to claim 2,
**characterized in that**
the object property is at least one from the list of the following:
• stiffness or modulus of elasticity for at least part of the additively manufactured object,
• integrity of the material bond,
• material state,
• material constitution,
• material composition,
• material stress,
• at least local material dimensioning, in particular wall thickness,
• porosity,
• at least local material density,
• damping characteristic,
• desired geometric parameters.

4. Method according to claim 2 or 3,
**characterized in that**
the assignment is carried out on the basis of multiply simulating the frequency-dependent reference natural oscillation behavior for the additively manufactured object with different object parameters, wherein the object property is influenced in particular in a targeted manner by changing at least one object parameter.

5. Method according to any one of claims 1 to 4,
**characterized in that**
on the basis of a comparison of the measured natural oscillation behavior (30) and the simulated reference natural oscillation behavior (32) for a specific frequency range (f) or with regard to a specific resonant frequency (31,33,35,36), information regarding a level of correspondence of the object state or of an object property to a desired object state or a desired object property is derived.

6. Method according to any one of claims 1 to 5,
**characterized by**
adapting object parameters for generating the virtual representation of the additively manufactured object (10) on the basis of a comparison of the measured natural oscillation behavior and the simulated frequency-dependent reference natural oscillation behavior of a reference object.

7. Production method for producing a metal-containing object (10) comprising
• obtaining digital model data representing the object (10),
• point-by-point or layer-by-layer, in particular additive, manufacturing of the object (10) on the basis of the model data by applying and/or removing manufacturing material point-by-point or layer-by-layer,
• carrying out a method for object analysis according to any one of Claims 1 to 6 with the object, comprising
□ measuring a frequency-dependent natural oscillation behavior (30) of the object (10) by
dynamically-mechanically exciting the object (10) in a defined frequency range (f), wherein exciting the object (10) is carried out by means of generating a body oscillation by applying a test signal (21'), and
detecting a body oscillation generated in the object (10) on account of the exciting, in particular a first natural resonance,
□ simulating or measuring a frequency-dependent reference natural oscillation behavior (32) for the object (10) by
generating a 3D model as a virtual digital representation of the object (10), or providing a physical reference object,
dynamically or dynamically-mechanically exciting the object or reference object in a simulated manner,
calculating or detecting the body oscillation generated in the object (10) or reference object on account of the exciting, and
□ deriving an object state on the basis of a comparison (34a,34b) of the measured natural oscillation behavior (30) and the frequency-dependent reference natural oscillation behavior (30,32), and
• deriving a manifestation of a specific manufacturing-dictated object property on the basis of the object state.

8. Production method according to claim 7,
**characterized in that**
on the basis of a comparison of a measured natural oscillation behavior (30) and a simulated reference natural oscillation behavior (32) for the specific frequency range or with regard to a specific resonant frequency (31,33,35,36), information regarding a level of correspondence of an object property specific to the additive manufacturing to a desired object property is derived.

9. Production method according to claim 7 or 8,
**characterized by**
• deriving stiffness information for the object (10) on the basis of the first measured frequency-dependent natural oscillation behavior, and
• determining a manufacturing quality on the basis of the stiffness information, in particular on the basis of the comparison of the measured natural oscillation behavior and the frequency-dependent reference natural oscillation behavior.

10. Production method according to any one of claims 7 to 9,
**characterized in that**
the object (10) is manufactured at least partly with lightweight construction in accordance with the digital model data and has at least one object portion which is defined by the solidified manufacturing material and which provides an, in particular sealed and/or gas-filled, cavity, wherein
• the object portion is shaped in hollow-cylindrical or tubular fashion, and/or
• the cavity has an inner stabilization structure, in particular a mechanically stabilizing web- or latticelike structure.

11. Production method according to any one of claims 7 to 10,
**characterized in that**
the manufacturing-dictated object property relates to the defined object portion of the lightweight construction.

12. Production method according to any one of claims 7 to 11,
**characterized in that**
the derived manifestation of a specific manufacturing-dictated object property is fed as feedback for the additive manufacturing of the object (10) and a corresponding adaptation of the additive manufacturing, in particular of the model data, is carried out.

13. Test system for objects (10) manufactured point-by-point or layer-by-layer, in particular additively, comprising
• a test unit configured for dynamically-mechanically testing an object produced by means of point-by-point or layer-by-layer, in particular additive, manufacturing and for deriving a first object state on the basis thereof, wherein the test unit comprises □ an oscillation generator (21) and
□ an oscillation pick-up (22) and is configured in such a way that
□ the object (10) manufactured point-by-point or layer-by-layer is dynamically-mechanically excitable in a defined frequency range, wherein a body oscillation is generatable by means of a test signal being applied by the oscillation generator (21),
□ body oscillations, in particular natural resonances, generated in the object on account of the test signal are detectable by the oscillation pick-up (22), and
□ a frequency-dependent natural oscillation behavior (30) for the object (10) is derivable on the basis of the detected body oscillations,
and
• a first control and processing unit configured for controlling the test unit,
wherein
the first control and processing unit is furthermore configured
• for comparing the frequency-dependent natural oscillation behavior (30) with a frequency-dependent reference natural oscillation behavior (32), wherein the reference natural oscillation behavior (32) is derived by means of a virtual representation of the object (10) and by means of carrying out a finite element analysis comprising
□dynamically exciting, in a simulated manner, the virtual representation into a virtual frequency range which at least overlaps the defined frequency range,
□ calculating a virtual body oscillation generated in the object on account of the exciting in a simulated manner,
• for deriving information regarding a level of correspondence between the natural oscillation behavior and the reference natural oscillation behavior, and
• for outputting the derived information,
in particular wherein the test system is configured for implementing a method for object analysis according to any one of claims 1 to 6.

14. System for the tested point-by-point or layer-by-layer, in particular additive, manufacturing of an object (10) comprising
• a test system according to claim 13,
• a manufacturing unit configured for the point-by-point or layer-by-layer, in particular additive, manufacturing of the object (10), in particular on the basis of metal-containing, pulverulent and/or granulated manufacturing material, in particular a 3D printer, by means of repeatedly applying and/or removing manufacturing material point-by-point or layer-by-layer, and
• a second control and processing unit configured for controlling the manufacturing of the object (10) by means of the manufacturing unit on the basis of digital model data for the object (10),
**characterized in that**
the virtual representation of the object (10) is generated on the basis of the digital model data for the object (10),
in particular wherein the system is configured for implementing a production method according to any one of claims 7 to 12.

15. Computer program product comprising instructions which cause a test system according to claim 13 to perform the method steps according to claim 1.

## Revendications

1. Procédé d'analyse d'objet comportant les étapes consistant à :
• mesurer, sur un objet (10) obtenu par fabrication additive, un comportement d'oscillation propre (30) dépendant de la fréquence, au moyen :
□d'une excitation mécanique dynamique de l'objet (10) dans une plage de fréquence (f) définie, ladite excitation de l'objet (10) étant effectuée par génération d'une oscillation mécanique par application d'un signal d'essai (21'), et
□de la détection de l'oscillation mécanique générée dans l'objet (10) à la suite de l'excitation, notamment d'un premier mode normal,
• simuler, pour l'objet (10) obtenu par fabrication additive, un comportement d'oscillation propre de référence (32) dépendant de la fréquence, au moyen :
□ de la génération d'un modèle 3D servant de représentation numérique virtuelle de l'objet (10),
□ les contraintes propres de l'objet (10) étant intégrées à ladite représentation virtuelle par simulation ou par mesure de référence,
□ de l'exécution d'une analyse par éléments finis à partir de la représentation virtuelle, dont :
• simulation d'une excitation dynamique sur ladite représentation virtuelle, dans une plage de fréquence virtuelle qui recouvre au moins partiellement la plage de fréquence définie, afin de générer une oscillation mécanique virtuelle,
• calcul de ladite oscillation mécanique virtuelle générée dans l'objet (10) à la suite de la simulation d'excitation, notamment d'un deuxième mode normal, et
• déduire un état de l'objet à partir d'une comparaison (34a, 34b) du comportement d'oscillation propre (30) mesuré et du comportement d'oscillation propre de référence (30, 32) simulé dépendant de la fréquence.

2. Procédé selon la revendication 1,
**caractérisé en ce que**
une propriété spécifique d'objet est affectée à une plage de fréquence donnée ou à une fréquence de résonance donnée (31, 33, 35, 36) et l'état de l'objet présente une information sur ladite propriété spécifique d'objet.

3. Procédé selon la revendication 2,
**caractérisé en ce que**
la propriété d'objet est au moins une des propriétés de la liste suivante :
• rigidité ou module d'élasticité d'au moins une partie de l'objet obtenu par fabrication additive,
• intégrité de la cohésion matérielle,
• état du matériau,
• caractéristiques du matériau,
• composition du matériau,
• sollicitation du matériau,
• dimensions au moins locales du matériau, notamment son épaisseur de paroi,
• porosité,
• densité au moins locale du matériau,
• caractéristique d'amortissement,
• paramètres géométriques cibles.

4. Procédé selon la revendication 2 ou 3,
**caractérisé en ce que**
l'affectation tient compte de multiples simulations du comportement d'oscillation propre de référence dépendant de la fréquence, pour différents paramètres d'objet de l'objet obtenu par fabrication additive, la propriété d'objet changeant sous l'effet d'une modification d'au moins un paramètre d'objet, notamment de manière ciblée.

5. Procédé selon l'une des revendications 1 à 4,
**caractérisé en ce que**
à partir d'une comparaison du comportement d'oscillation propre (30) mesuré et du comportement d'oscillation propre de référence (32) simulé pour une plage de fréquence (f) donnée ou en lien avec une fréquence de résonance donnée (31, 33, 35, 36), il est déduit une information sur un niveau de concordance de l'état de l'objet ou d'une propriété d'objet avec un état cible de l'objet ou une propriété cible de l'objet.

6. Procédé selon l'une des revendications 1 à 5,
**caractérisé en ce que**
des paramètres d'objet sont adaptés pour générer la représentation virtuelle de l'objet (10) obtenu par fabrication additive, compte tenu d'une comparaison du comportement d'oscillation propre mesuré et du comportement d'oscillation propre de référence (30, 32) simulé dépendant de la fréquence d'un objet de référence.

7. Procédé de production d'un objet contenant du métal (10), comprenant les étapes consistant à :
• obtenir des données de modèle numérique représentant ledit objet (10),
• fabriquer l'objet (10) par points ou par couches, notamment par fabrication additive, compte tenu des données de modèle, par application et/ou enlèvement de points ou de couches de matériau de fabrication,
• exécuter sur ledit objet un procédé d'analyse d'objet selon l'une des revendications 1 à 6, comportant les étapes consistant à :
□ mesurer un comportement d'oscillation propre (30) de l'objet (10) dépendant de la fréquence, au moyen :
• d'une excitation mécanique dynamique de l'objet (10) dans une plage de fréquence (f) définie, ladite excitation de l'objet (10) étant effectuée par génération d'une oscillation mécanique par application d'un signal d'essai (21'), et
• de la détection de l'oscillation mécanique générée dans l'objet (10) à la suite de l'excitation, notamment d'un premier mode normal,
□ simuler ou mesurer un comportement d'oscillation propre de référence (32) de l'objet (10) dépendant de la fréquence, au moyen :
• de la génération d'un modèle 3D servant de représentation numérique virtuelle de l'objet (10), ou de la mise à disposition d'un objet de référence physique,
• de la simulation d'une excitation dynamique ou mécanique dynamique de l'objet ou de l'objet de référence,
• du calcul ou de la détection de l'oscillation mécanique générée dans l'objet (10) ou dans l'objet de référence à la suite de l'excitation, et
□ déduire un état de l'objet à partir d'une comparaison (34a, 34b) du comportement d'oscillation propre (30) mesuré et du comportement d'oscillation propre de référence (30, 32) dépendant de la fréquence, et
• déduire l'expression d'une propriété spécifique d'objet conditionnée par la fabrication, à partir dudit état de l'objet.

8. Procédé de production selon la revendication 7,
**caractérisé en ce que**
à partir d'une comparaison d'un comportement d'oscillation propre (30) mesuré et d'un comportement d'oscillation propre de référence (32) simulé pour une plage de fréquence donnée ou en lien avec une fréquence de résonance donnée (31, 33, 35, 36), il est déduit une information sur un niveau de concordance d'une propriété d'objet spécifique à la fabrication additive avec une propriété cible de l'objet.

9. Procédé de production selon la revendication 7 ou 8,
**caractérisé par**
• la déduction d'une information de rigidité relative à l'objet (10) à partir du premier comportement d'oscillation propre mesuré dépendant de la fréquence, et
• la détermination d'une qualité de fabrication compte tenu de ladite information de rigidité, notamment compte tenu de la comparaison du comportement d'oscillation propre mesuré et du comportement d'oscillation propre de référence dépendant de la fréquence.

10. Procédé de production selon l'une des revendications 7 à 9,
**caractérisé en ce que**
l'objet (10) est fabriqué selon les données de modèle numérique au moins partiellement en construction légère et possède au moins une portion d'objet définie par le matériau de fabrication solidifié et qui présente une cavité, notamment fermée et/ou remplie de gaz,
étant entendu que
• la portion d'objet est de forme cylindrique creuse ou tubulaire et/ou
• la cavité présente une structure intérieure de stabilisation, notamment une structure d'entretoise ou de grillage qui produit une stabilisation mécanique.

11. Procédé de production selon l'une des revendications 7 à 10,
**caractérisé en ce que**
la propriété d'objet conditionnée par la fabrication concerne la portion d'objet définie de la construction légère.

12. Procédé de production selon l'une des revendications 7 à 11,
**caractérisé en ce que**
l'expression d'une propriété spécifique d'objet conditionnée par la fabrication et déduite sert de feedback pour la fabrication additive de l'objet (10), et une adaptation de ladite fabrication additive, et notamment des données de modèle, est réalisée en conséquence.

13. Système d'essai pour un objet (10) fabriqué par points ou par couches, notamment par fabrication additive, comportant :
• une unité d'essai conçue pour l'essai mécanique dynamique d'un objet fabriqué par points ou par couches, notamment par fabrication additive, et pour en déduire un premier état de l'objet, ladite unité d'essai présentant :
□ un générateur d'oscillations (21) et
□ un capteur d'oscillations (22)
et étant conçue de sorte que :
□ l'objet (10) fabriqué par points ou par couches (10) peut être excité de manière mécanique dynamique dans une plage de fréquence définie, une oscillation mécanique pouvant être générée par application d'un signal d'essai par ledit générateur d'oscillations (21),
□ le capteur d'oscillations (22) peut détecter les oscillations mécaniques, notamment les modes normaux, provoquées par le signal d'essai dans l'objet, et
□ à partir des oscillations mécaniques détectées, il est possible de déduire, pour l'objet (10), un comportement d'oscillation propre (30) dépendant de la fréquence,
et
• une première unité de commande et de traitement conçue pour commander l'unité d'essai,
ladite première unité de commande et de traitement étant en outre conçue :
• pour comparer le comportement d'oscillation propre (30) dépendant de la fréquence et un comportement d'oscillation propre de référence (32) dépendant de la fréquence, ledit comportement d'oscillation propre de référence (32) étant déduit au moyen d'un modèle 3D servant de représentation virtuelle de l'objet (10) et au moyen d'une analyse par éléments finis consistant à
□ simuler une excitation dynamique sur ladite représentation virtuelle, dans une plage de fréquence virtuelle qui recouvre au moins partiellement la plage de fréquence définie,
□ calculer une oscillation mécanique virtuelle générée dans l'objet à la suite de la simulation d'excitation,
des contraintes propres de l'objet (10) étant intégrées à ladite représentation virtuelle par simulation ou par mesure de référence,
• pour déduire une information sur un niveau de concordance entre le comportement d'oscillation propre et le comportement d'oscillation propre de référence, et
• pour fournir l'information déduite,
le système d'essai étant notamment conçu pour exécuter un procédé d'analyse d'objet selon l'une des revendications 1 à 6.

14. Système de fabrication par points ou par couches, notamment de fabrication additive, d'un objet (10), soumise à essai et comportant :
• un système d'essai selon la revendication 13,
• une unité de fabrication conçue pour fabriquer par points ou par couches, notamment par fabrication additive, ledit objet (10), notamment à partir d'un matériau de fabrication contenant du métal, sous forme de poudre et/ou de granulés, notamment une imprimante 3D, par application et/ou enlèvement répétés de points ou de couches de matériau de fabrication, et
• une deuxième unité de commande et de traitement conçue pour commander la fabrication de l'objet (10) au moyen de ladite unité de fabrication et compte tenu de données de modèle numérique de l'objet (10),
**caractérisé en ce que**
la représentation virtuelle de l'objet (10) est générée compte tenu des données de modèle numérique de l'objet (10),
le système étant notamment conçu pour exécuter un procédé de production selon l'une des revendications 7 à 12.

15. Produit-programme d'ordinateur comportant des commandes amenant le système d'essai selon la revendication 13 à exécuter les étapes du procédé selon la revendication 1.
